(19) Europäisches Patentamt

European Patent Office

Office européen des brevets

(11) Veröffentlichungsnummer : **0 445 901 A2**

## (12) EUROPÄISCHE PATENTANMELDUNG

(21) Anmeldenummer : 91250056.8

(22) Anmeldetag : 06.03.91

(51) Int. Cl.⁵ : **B60C 27/08**

(30) Priorität : 07.03.90 DE 4007741

(43) Veröffentlichungstag der Anmeldung :
**11.09.91 Patentblatt 91/37**

(84) Benannte Vertragsstaaten :
**AT IT SE**

(71) Anmelder : **RUD-Kettenfabrik Rieger & Dietz
GmbH u. Co.
Friedensinsel
W-7080 Aalen 1 (DE)**

(72) Erfinder : **Weidler, Erhard Alfred
Danziger Strasse 32
W-7080 Aalen-Unterkochen (DE)**

(74) Vertreter : **Böning, Manfred, Dr. Ing.
Patentanwälte Dipl.-Ing. Dieter Jander Dr. Ing.
Manfred Böning Leistikowstrasse 2
W-1000 Berlin 19 (DE)**

(54) **Steggled für Reifenketten.**

(57)    Zur Erhöhung der Griffigkeit und Verschleißfestigkeit eines Steggliedes, welches aus einem bodenseitigen Gliedteil (1) und einem reifenseitigen Gliedteil (2) besteht, wird vorgeschlagen, den bodenseitigen Gliedteil (1) mit stufenförmig ausgebildeten Verschleißflächen (14,15) auszustatten, wobei die Breite (b) der Stufen der Verschleißflächen größer sein sollte als deren Höhe (h).

Fig. 2

EP 0 445 901 A2

## STEGGLIED FÜR REIFENKETTEN

Die Erfindung betrifft ein Stegglied für Reifenketten mit mindestens einer Aufnahmeöffnung zum Anschluß von Verbindungsgliedern sowie mit einem reifenseitigen Gliedteil und einem zur Erhöhung seiner Griffigkeit und Verschleißfestigkeit mit Profilierungen versehenen bodenseitigen Gliedteil.

Aus der DE-PS 37 19 751 ist ein Stegglied der vorstehenden Art bekannt, bei dem mindestens eine Seitenfläche des bodenseitigen Gliedteiles mit jeweils einer Vielzahl von die Seitenfläche vergrößernden, vertikal orientierten Mulden versehen ist. Durch die Mulden wird die Oberfläche des bekannten Gliedes vergrößert und dadurch seine Verschleißbeständigkeit erhöht. Wie sich gezeigt hat, bringt das bekannte Stegglied beim Einsatz in sehr abrasiven Materialien mit zunehmendem Verschleiß gewisse Probleme mit sich, die ihre Ursache darin haben, daß harte, scharfkantige Partikel, die den regelmäßig weicheren Gliedkern umgebende, verhältnismäßig dünne, härtere Gliedhülle derart stark beanspruchen, daß es zu unerwünschten Randausbrüchen kommt.

Der Erfindung liegt die Aufgabe zugrunde, ein Stegglied der in Betracht gezogenen Art zu schaffen, das insbesondere für den Einsatz auf Böden aus stark abrasivem Material geeignet ist und das selbst bei vergleichsweise flacher Gliedausbildung über eine große Griffigkeit und ein großes, vorzugsweise gehärtetes Verschleißvolumen verfügt. Diese Aufgabe wird erfindungsgemäß dadurch gelöst, daß der bodenseitige Gliedteil sich stufenartig zum Boden hin verjüngende Verschleißflächen aufweist.

Das erfindungsgemäße Stegglied bietet den Vorteil, daß bei ihm die dem Boden zugewandten Verschleißzonen deutlich breiter sind als bei der bekannten Konstruktion, da infolge der gewählten Stufenform die regelmäßig härteren Randschichten sich nicht primär senkrecht zum Boden, sondern in weit stärkerem Maße als bisher parallel zum Boden erstrecken. Da das Verschleißvolumen gewissermaßen in die Breite des Gliedes verlagert ist, kann das Glied zudem ohne Standzeiteinbuße flacher ausgebildet sein als das bekannte Stegglied, d.h. es eignet sich im besonderen Maße für die Herstellung von Reifenketten, die für Fahrzeuge bestimmt sind, bei denen der Freiraum zwischen dem Reifen und Teilen des Fahrzeuges stark eingeengt ist. Die Stufen erhöhen schließlich deutlich die Griffigkeit des Steggliedes.

Weitere Einzelheiten und Merkmale der Erfindung ergeben sich aus den Unteransprüchen und der nachstehenden Beschreibung der beigefügten, den Kern der Erfindung verdeutlichenden Zeichnung. Es zeigen:

Fig. 1 die Seitenansicht eines ersten mit zwei horizontalen Kettengliedern verbundenen Steggliedes,

Fig. 2 einen Schnitt längs der Linie II-II in Fig. 1,

Fig. 3 einen der Fig. 2 entsprechenden Schnitt bei gegeneinander verkanteten Horizontal- und Vertikalgliedern,

Fig. 4 einen der Fig. 2 entsprechenden Schnitt durch ein modifiziertes Stegglied,

Fig. 5 die Seitenansicht eines Steggliedes mit unterbrochenem bodenseitigen Gliedteil,

Fig. 6 einen der Fig. 2 entsprechenden Schnitt durch ein viertes Stegglied und

Fig. 7 einen der Fig. 6 entsprechenden Schnitt bei zwischen Boden und Fahrbahn schräg liegendem Stegglied.

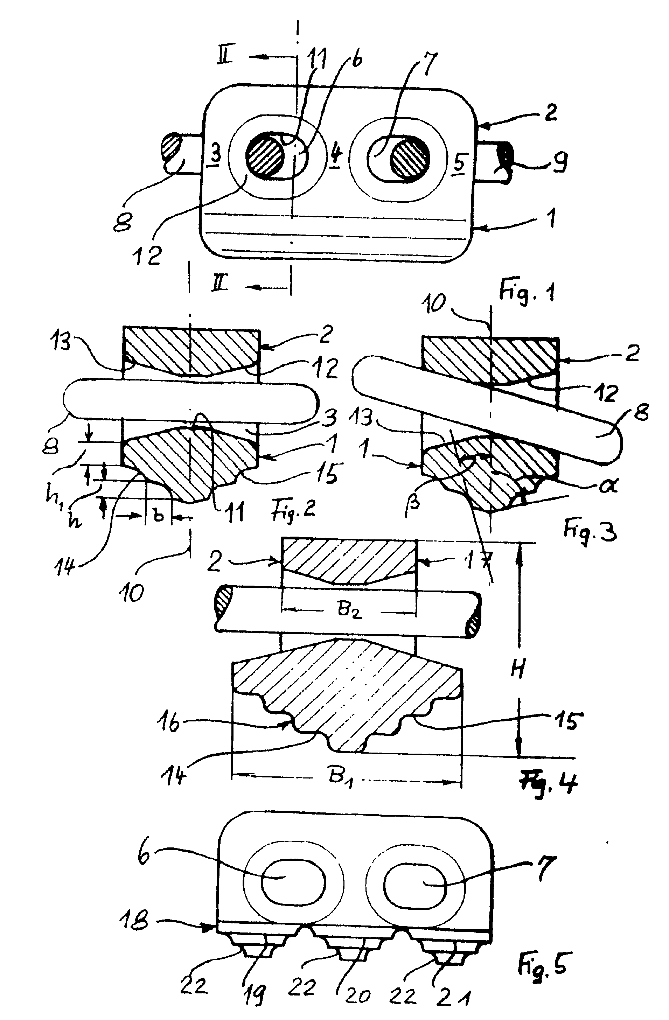

Das in den Figuren 1 bis 3 dargestellte Stegglied besitzt einen dem Boden bzw. der Fahrbahn zugewandten bodenseitigen Gliedteil 1 und einen der Lauffläche des Reifens zugewandten reifenseitigen Gliedteil 2. Die beiden Gliedteile 1 und 2 sind über Stege 3,4 und 5 miteinander verbunden, zwischen denen Aufnahmeöffnungen 6 und 7 für Horizontalglieder 8 und 9 angeordnet sind. Die Aufnahmeöffnungen 6 und 7 weisen im Bereich der durch die beiden Gliedteile 1,2 verlaufenden Mittenebene 10 senkrecht zu dieser Ebene orientierte Begrenzungsflächen 11 auf, an die sich trichterartig nach außen erweiternde Begrenzungsflächen 12,13 anschließen, die bei Kippbewegungen zwischen den als Vertikalglieder ausgebildeten Steggliedern und den Horizontalgliedern 8,9 die Gewähr für eine gute Auflage der Horizontalglieder 8,9 an den Steggliedern bieten und die Haltbarkeit beeinträchtigende Einkerbungen an den Horizontalgliedern verhindern.

Der bodenseitige Gliedteil 1 ist im wesentlichen dachförmig ausgebildet und auf seiner gesamten Länge mit symmetrisch zur Mittenebene 10 angeordneten Verschleißflächen 14 und 15 versehen, die Stufen formen. Die Breite b der meisten Stufen ist dabei zur Erzielung eines großen dem Boden zugewandten Verschleißvolumenanteiles größer als ihre Höhe h. Lediglich für die Höhe $h_1$ der den Aufnahmeöffnungen 6,7 nächstgelegenen Stufe gilt dies aus Stabilitätsgründen nicht. Die der Fahrbahn zugewandten Abschnitte der Verschleißflächen 14,15 nehmen zweckmäßigerweise zur Mittenebene 10 des Steggliedes einen Winkel $\alpha$ ein, der in der Größenordnung von 80° bis 90° liegt, während die übrigen Abschnitte in einem spitzen Winkel $\beta$ zur Mittenebene 10 angeordnet sind, der in der Größenordnung von 0° bis 30° liegt.

Die Figur 4 zeigt ein Stegglied mit einem modifizierten Querschnitt, das im übrigen weitgehend dem Stegglied gemäß den Figuren 1 bis 3 entspricht. Bei dem Stegglied gemäß Figur 4 ist die maximale Breite $B_1$ des bodenseitigen Gliedteiles 16 größer als die Breite $B_2$ des reifenseitigen Gliedteiles 17 und außerdem die Zahl der Stufen der Verschleißfläche erhöht. Das Verhältnis der maximalen Stegbreite $B_1$ zur Steghöhe H ist in diesem Fall annähernd 1 : 1. Es sollte Werte von 7 : 10 nicht unterschreiten.

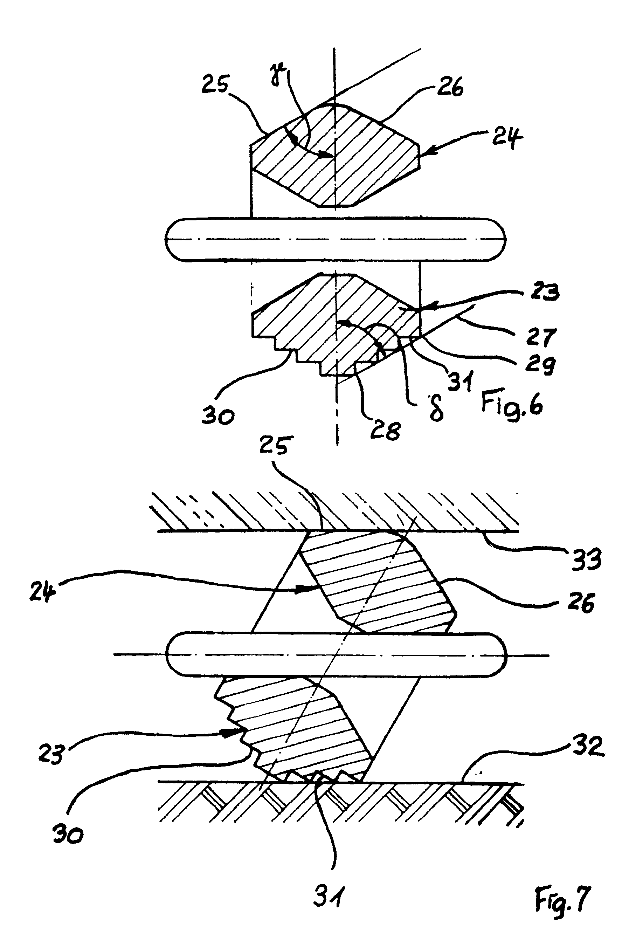

In Figur 5 ist ein Stegglied dargestellt, bei dem der bodenseitige Gliedteil 18 keine durchgehenden, satteldachförmig angeordneten Verschleißflächen aufweist, sondern von Höckern 19,20,21 mit jeweils umlaufenden stufenförmigen Verschleißflächen 22 gebildet wird.

Bei dem in den Figuren 6 und 7 dargestellten Stegglied ist nicht nur der bodenseitige Gliedteil 23, sondern auch der reifenseitige Gliedteil 24 dachförmig ausgebildet. Die dem Reifen zugewandten Flächen des Gliedteiles 24 weisen symmetrisch zur Mittenebene 10 des Steggliedes angeordnete schräge Abschnitte 25 und 26 auf, welche mit der Mittenebene 10 einen Winkel $\gamma$ in der Größenordnung von 50° bis 85° einschließen. Der Winkel $\gamma$ ist vorzugsweise genauso groß wie der Winkel $\delta$, den die Tangente 27 an die Außenkanten 28 und 29 der jeweils untersten und obersten Stufe der Verschleißflächen 30 und 31 des bodenseitigen Gliedteiles 23 gegenüber der Mittenebene einnimmt, d.h. die Tangente an die Außenkanten 28,29 der Stufen der rechten Gliedhälfte verläuft parallel zum Abschnitt 25 und die Tangente an die entsprechenden Aussenkanten der Stufen der linken Gliedhälfte parallel zum Abschnitt 26.

Durch die dachförmige Ausbildung auch des reifenseitigen Gliedteiles 24 wird erreicht, daß das jeweilige Stegglied in den Fällen reifenschonend gegen die Lauffläche 33 des Reifens anliegt, in denen es im allgemeinen den stärksten Belastungen ausgesetzt ist, d.h. beim Anfahren und Bremsen. In beiden Situationen kippt es in eine Lage, in der - wie dies die Figur 7 zeigt - der bodenseitige Gliedteil 23 mit einer Vielzahl von Kanten und einer großen Verschleißfläche Kontakt mit dem Boden 32 hat und der reifenseitige Gliedteil 24 sich ebenfalls mit einer großen Fläche am Reifen abstützt.

Bei den in den Figuren dargestellten Steggliedern liegen die Außenkanten sämtlicher Stufen jeweils einer der beiden dachförmig ausgebildeten Verschleißflächen auf einer Geraden, statt dessen sind auch Lösungen möglich, bei denen die Außenkanten z.B. auf jeweils einer konkav oder konvex gekrümmten Linie liegen.

**Patentansprüche**

1. Stegglied für Reifenketten mit mindestens einer Aufnahmeöffnung (6,7) zum Anschluß von Verbindungsgliedern (8,9) sowie mit einem reifenseitigen Gliedteil (2;17;24) und einem zur Erhöhung seiner Griffigkeit und Verschleißfestigkeit mit Profilierungen versehenen bodenseitigen Gliedteil (1;16;18;23), dadurch **gekennzeichnet,** daß der bodenseitige Gliedteil (1;16;18;23) sich stufenartig zum Boden hin verjüngende Verschleißflächen (14,15;22;30,31) aufweist.

2. Stegglied nach Anspruch 1, dadurch gekennzeichnet, daß die Breite (b) der Stufen größer ist als ihre Höhe (h).

3. Stegglied nach Anspruch 1 oder 2, dadurch gekennzeichnet, daß der bodenseitige Gliedteil (1;16;23) im wesentlichen dachförmig ausgebildet ist und die Verschleißflächen (14,15;30,31) sich jeweils über die gesamte Gliedlänge erstrecken.

4. Stegglied nach Anspruch 1 oder 2, dadurch gekennzeichnet, daß der bodenseitige Gliedteil (18) mehrere Höcker (19,20,21) bildet.

5. Stegglied nach einem der Ansprüche 1 bis 4, dadurch gekennzeichnet, daß die der Fahrbahn zugewandten Abschnitte der Verschleißflächen (14,15;22;30,31) zu der durch beide Gliedteile (1,2) verlaufenden Mittenebene (10) einen Winkel ($\alpha$) von 80° bis 90° einnehmen.

6. Stegglied nach Anspruch 5, dadurch gekennzeichnet, daß die übrigen Abschnitte der Verschleißflächen (14,15;22;30,31) einen Winkel ($\beta$) von 0° bis 30° zur durch beide Gliedteile verlaufenden Mittenebene (10) einnehmen.

7. Stegglied nach einem der Ansprüche 1 bis 6, dadurch gekennzeichnet, daß die Höhe ($h_1$) der der Aufnahmeöffnung (6,7) am nächsten gelegenen Stufe größer ist als die Höhe (h) der übrigen Stufen.

8. Stegglied nach einem der Ansprüche 1 bis 7, dadurch gekennzeichnet, daß der bodenseitige Gliedteil (16) breiter als der reifenseitige Gliedteil (2) ist.

9. Stegglied nach einem der Ansprüche 1 bis 8, dadurch gekennzeichnet, daß die Stufen der Verschleißflächen (14,15;22;30,31) symmetrisch zur durch beide Gliedteile verlaufenden Mittenebene (10) ausgebildet sind.

10. Stegglied nach einem der Ansprüche 1 bis 9, dadurch gekennzeichnet, daß die Stufen umlaufend ausgebildet sind.

11. Stegglied nach einem der Ansprüche 1 bis 10, dadurch gekennzeichnet, daß die Aufnahmeöffnungen (8,9) im Bereich der durch die beiden Gliedteile (1,2) verlaufenden Mittenebene (10) über einen Teil der Gliedbreite senkrecht zur Mittenebene (10) verlaufende Begrenzungsflächen (11) aufweisen.

12. Stegglied nach Anspruch 11, dadurch gekennzeichnet, daß sich an die senkrecht zur Mittenebene (10) orientierten Begrenzungsflächen (11) sich nach außen erweiternde Begrenzungsflächen (12,13) anschließen.

13. Stegglied nach einem der Ansprüche 1 bis 12, dadurch gekennzeichnet, daß der Quotient aus maximaler Stegbreite ($B_1$) und Steghöhe (H) 0,7 bis 1,2 beträgt.

14. Stegglied insbesondere nach einem der Ansprüche 1 bis 13, dadurch gekennzeichnet, daß die der Fahrbahn zugewandten Flächen (30,31) seines bodenseitigen Gliedteiles (23) und die dem Reifen zugewandten Flächen seines reifenseitigen Gliedteiles (24) dachförmig ausgebildet sind.

15. Stegglied nach Anspruch 14, dadurch gekennzeichnet, daß die dem Reifen zugewandten Flächen des reifenseitigen Gliedteiles (24) schräge Abschnitte (25,26) aufweisen, die einen Winkel (γ) von 50° bis 85° zur durch beide Gliedteile (23,24) verlaufenden Mittenebene (10) einnehmen.

16. Stegglied nach Anspruch 14 oder 15, dadurch gekennzeichnet, daß der Winkel (γ) zwischen den dem Reifen zugewandten schrägen Abschnitten (25,26) des reifenseitigen Gliedteiles (24) und der Mittenebene (10) größer oder gleich einem Winkel (δ) zwischen der Tangente (27) an die Außenkanten (28,29) der jeweils ersten und letzten Stufe der Verschleißflächen (30,31) und der Mittenebene (10) ist.

17. Stegglied nach Anspruch 15 oder 16, dadurch gekennzeichnet, daß die Tangenten (27) an die Außenkanten (27,28) der jeweils ersten und letzten Stufe der Verschleißflächen (30,31) des bodenseitigen Gliedteiles (23) parallel zu den schrägen Abschnitten (25,26) der dem Reifen zugewandten Flächen des reifenseitigen Gliedteiles (24) verlaufen.

18. Stegglied nach einem der Ansprüche 1 bis 17, dadurch gekennzeichnet, daß es randschicht- bzw. einsatzgehärtet ist.

Fig. 1

Fig. 2

Fig. 3

Fig. 4

Fig. 5

25    γ    26    24    23    27    29    31    Fig.6    30    28    δ

25    33    24    26    23    32    30    31    Fig.7